# EUROPEAN PATENT APPLICATION

(11) **EP 3 553 028 A1**
(43) Date of publication of application: **16.10.2019**
(21) Application number: 17879007.7
(22) Date of filing: 07.12.2017
(51) Int. Cl.: C01G 9/02, C04B 35/453

(54) **ZINC OXIDE POWDER FOR PREPARING ZINC OXIDE SINTERED BODY WITH HIGH STRENGTH AND LOW THERMAL CONDUCTIVITY**

(30) Priority: 07.12.2016 JP 2016237896
(71) Applicant: JFE Mineral Company, Ltd., Tokyo 105-0014 (JP)
(72) Inventor: UDAGAWA Etsurou, Tokyo 105-0014 (JP); ECHIZENYA Yuko, Tokyo 105-0014 (JP); NAKATA Yoshimi, Tokyo 105-0014 (JP)
(74) Representative: Grünecker Patent- und Rechtsanwälte PartG mbB
(86) International application number: PCT/JP2017/044049
(87) International publication number: WO 2018/105699

(57) **Abstract**

The zinc oxide powder has a crystallite size of 20 to 50 nm as determined by X-ray diffraction, a particle diameter of 15 to 60 nm as determined by the BET method, a loose bulk density of 0.38 to 0.50 g/cm³, and a tapped density of 0.50 to 1.00 g/cm³. The zinc oxide powder has a small number of bound particles and a high tap density, and is useful as a raw material for obtaining a zinc oxide sintered body exhibiting high strength and low thermal conduction.

## Description

### TECHNICAL FIELD

The present invention relates to providing a zinc oxide material that can be used as a raw material to obtain a zinc oxide sintered body with high strength and low thermal conductivity.

### BACKGROUND ART

A member made from ceramic is ordinarily obtained by forming and sintering a powder. With regard to technology for forming powder to impart a shape, numerous technologies that aim for a dense, near-net shape have been proposed and are being used in practical applications including various types of granulation methods, as well as press forming, CIP forming, and tape forming. However, to realize a high strength ceramic with low thermal conductivity, the ceramic needs to be dense with numerous grain boundaries, that is, the grain growth needs to be uniform and small; the realization of such ceramics is difficult since sintering (including burning) of ceramics involves densification due to grain growth. Therefore, a sintering powder for which the growth of grains is suppressed while grain growth and densification occur uniformly in the process of sintering, is desired.

Compared to other ceramic powders such as aluminum oxide and zirconium oxide, zinc oxide has characteristics such as a high vapor pressure of zinc and easier grain growth. The raw material powder of zinc oxide has been widely used as a white pigment for many years, production methods such as a French method and a German method have been established, and inexpensive, high quality product is being supplied. However, these powders have a small particle size of around 0.3 to 0.6 µm, densification of a raw material of a sintered member cannot be anticipated at low temperatures, and the obtained sintered particle size is large.

In recent years, relatively inexpensive powder that is synthesized by a wet process primarily for use in cosmetic materials has been supplied with a grade of 0.3 µm or less. In order to achieve low temperature sintering without the use of molten liquid forming and a sintering aid, it is important that the particle size of the zinc oxide powder as the raw material be small. However, no proposals for effective means for suppressing grain growth, which is one of the issues that is addressed by the present invention, have been found. The issues to be addressed by the present invention are clarified through the main patent documents below.

Patent Document 1 describes that with a zinc oxide obtained by adding an alkali carbonate agent dropwise to a water soluble zinc carboxylate and controlling to a constant pH, the primary particles of the zinc oxide aggregate to form tube-shaped secondary particles, and the resulting zinc oxide can be used for cosmetic materials that exhibit excellent ultraviolet ray shielding capability and transparency, but the tapped density is low and grain growth is large due to traces of the tube shape, which is the shape of the precursor. Although such a configuration is effective for the concealment property required in cosmetic materials, it is not suited for a raw material of a sintered body. More specifically, acetic acid is added to a zinc chloride aqueous solution and dissolved, and a sodium carbonate solution is added dropwise thereto to adjust the pH to pH 8. The obtained precipitate is filtered with a filter, rinsed with water, and then dried and heat treated at 400°C for 3 hours to obtain a zinc oxide powder.

Patent Document 2 describes a feature of a basic zinc chloride that excels in a concealment property and has a flake-shape, and that also excels in the control of crystallinity, shape, size, and the like. However, even when such a basic zinc chloride is converted to zinc oxide through heat treatment, a large amount of chlorine remains. Regarding the control of aspect as a main, the basic zinc chloride has a large flake-shape with an aspect ratio of 10 or greater, and is easily sintered to form a plate shape when dechlorinating and dehydrating, the sintered particle size is large, and voids when sintering are also large. Thus, the basic zinc chloride is not suited for use in a sintering raw material.

Patent Document 3 discloses an invention that pertains to the production of a thermistor for which improvements in performance as a temperature sensor for exhaust gas of vehicles are anticipated. The invention of Patent Document 3 includes wet synthesis (spray pyrolysis) of a precursor that achieves both homogeneity of the composition and a dense structure of a thermistor sintered member, which is a composite oxide, and heat treatment of the obtained powder having an average particle size from 30 to 50 nm, which improves the tapped density using grain growth to an average particle size from 0.1 to 1 µm. The use of particles whose grains have been allowed to grow can reduce the amount of binder that is used, and provide a dense sintered body with a near-net shape. However, with this method, a reduction in the sintering temperature and suppression of grain growth cannot be anticipated.

Patent Document 4 discloses an invention that pertains to the production of a granulated powder with high sphericity, and provides a filler that has a high filling ratio and is used in grease and paints. Patent Document 4 does not specify the zinc oxide primary particles that are used in the production of the filler particles, but describes that a surfactant and binder are used in an organic solvent to form a slurry, and the slurry is subjected to a spray drying method such that the zinc oxide particles have a sphericity (short diameter/long diameter) from 1.00 to 1.10, and a median diameter (D50) from 20 to 100 µm. Moreover, setting the D90/D10 size ratio to 2.8 or less reduces the number of extremely large particles. This can achieve improvements in the filling ratio and a reduction in the angle of repose, and provide an excellent filler material. However, the granulated powder that is obtained with this method is not suited as a sintering material. This is because when sintering is performed, first the spherical granular powder (filler) shrinks, causing the formation of large voids. Such voids can be reduced by sintering at a high temperature for a long period of time, but cannot be eliminated.

Patent Document 5 discloses a zinc oxide powder for a sputter target, and a zinc oxide composite oxide powder. With the sputter target, the material needs to be dense with high thermal conductivity, and homogeneity of the composition is required. With this feature, capsule HIP (hot isostatic pressing and sintering) is used as the sintering method for achieving densification, and an issue thereof is the matter of setting the filling ratio in the capsule ((tapped density of the raw material powder)/(theoretical density)) to 50% or greater. As a means for resolving this issue, a powder that has a tapped density of 2.8 g/cm³ or greater and that is obtained by sintering a zinc oxide powder having a tapped density of less than 50% in the atmosphere at a temperature from 900 to 1400°C is used. The method for improving the tapped density utilizes the heat treatment, and therefore the technique is the same as that of Patent Document 3. However, it is thought that sintering with the capsule HIP method can better prevent the volatilization of zinc oxide and can also reduce the sintering temperature in comparison to sintering while open to the atmosphere. This can be said to be a feature for realizing a dense sintering material with a high level of strength and a low level of grain growth. However, this method provides a sintering material that is premised on capsule HIP, and differs from the present invention.

Non-Patent Document 1 describes that petal-shaped zinc oxide having both a high ultraviolet ray protection ability and high transparency is produced in a high temperature condition through titration with a constant pH. In this case, a basic zinc carbonate precursor with a card shape is coupled and grown into a petal-shape. In a case in which the precursor is then heat treated and converted to zinc oxide, the shape thereof is maintained. Therefore, the seed crystals become large, and particle growth becomes remarkably large, and thus a uniform sintered body cannot be obtained. More specifically, a zinc chloride solution and an alkaline solution (a mixed solution of sodium carbonate and sodium hydroxide) are added dropwise to water maintained at a temperature of 60°C in a constant pH condition. Filtration and rinsing with water are performed, and then the material is dried, and the dried substance is sintered at 400°C to obtain zinc oxide.

### CITATION LIST

### PATENT LITERATURES

Patent Document 1: JP 2007-8805 A
Patent Document 2: JP 2015-038014 A
Patent Document 3: JP 2003-119080 A
Patent Document 4: JP 5617410 B
Patent Document 5: JP 2013-189369 A

### NON-PATENT LITERATURE

Non-Patent Document 1: State-of-the-Art Research and Prospective of Zinc Oxide, 3. Microparticles, Tomosuke Katsuyama (CMC Publishing Co., Ltd.), published January 31, 2011

### SUMMARY OF THE INVENTION

### TECHNICAL PROBLEMS

An object addressed by the present invention is to resolve the problems of known technology and provide a zinc oxide powder for obtaining a zinc oxide sintered body with high strength and low thermal conductivity by facilitating uniform grain growth and forming a dense structure while suppressing excessive grain growth. More specifically, an object of the present invention is to provide a powder for obtaining, by relatively low temperature sintering, a zinc oxide sintered body with high strength and low thermal conductivity for bulk thermal insulation materials made from sintered bodies of zinc oxide, which is not easily sintered due to the vapor pressure of zinc being high even in atmospheric sintering.

### SOLUTION TO PROBLEMS

That is, the present invention provides the followings.
(1) A zinc oxide powder wherein a crystallite size determined through X-ray diffraction is from 20 to 50 nm, a particle size determined through a BET method is from 15 to 60 nm, a loose bulk density is from 0.38 to 0.50 g/cm³, and a tapped density is from 0.50 to 1.00 g/cm³, and more preferably from 0.60 to 1.00 g/cm³.
(2) A zinc oxide powder wherein a median diameter determined through a dynamic scattering method is from 30 to 60 nm, a cumulant diameter is from 40 to 82 nm, and a cumulant polydispersity index is from 0.05 to 0.20, more preferably from 0.05 to 0.15, and even more preferably from 0.05 to 0.12.
(3) The zinc oxide powder according to (1) or (2), wherein a crystallite size of sintered particles determined through X-ray diffraction is from 70 to 120 nm when the sintered particles are obtained by sintering the zinc oxide powder according to (1) or (2) at 1000°C, a crystallite size of sintered particles determined through X-ray diffraction is from 75 to 170 nm when the sinter particles are obtained by sintering the zinc oxide powder at 1150°C, and from the sintered particles sintered at 1000°C to the sintered particles sintered at 1150°C, a rate of increase in the crystallite size determined through X-ray diffraction is 10% or less, and a rate of decrease in the number of particles observed by SEM is 70% or less.
(4) A zinc oxide powder for sintering capable of obtaining a zinc oxide sintered body that is dense and has high strength and low thermal conductivity by forming the zinc oxide powder according to any one of (1) to (3) above as is or after crushing process with a bead mill or granulation process using a spray dryer, and subsequently sintering the resultant at a temperature of 1200°C or less.

### ADVANTAGEOUS EFFECTS OF INVENTION

In comparison to zinc oxide powder that is obtained through steps such as dehydration from basic zinc salt, which is a precursor synthesized by a known wet process, the zinc oxide powder of the present invention is characterized by its crystallite size and tapped density.

The zinc oxide powder of the present invention can not only be sintered at low temperatures, but can also be used to obtain a zinc oxide sintered body with a uniform structure and reduced excessive grain growth.

In the synthesis of a basic zinc salt that is a precursor of the zinc oxide powder of the present invention, the inventors diligently examined the synthesis conditions, and discovered the effectiveness of optimizing the flake shape of basic zinc carbonate, which is one type of basic zinc salt. As a result, the inventors found that zinc oxide powder after dehydration and decarboxylation is characterized by a specific particle size and tapped density.

### BRIEF DESCRIPTION OF THE DRAWINGS

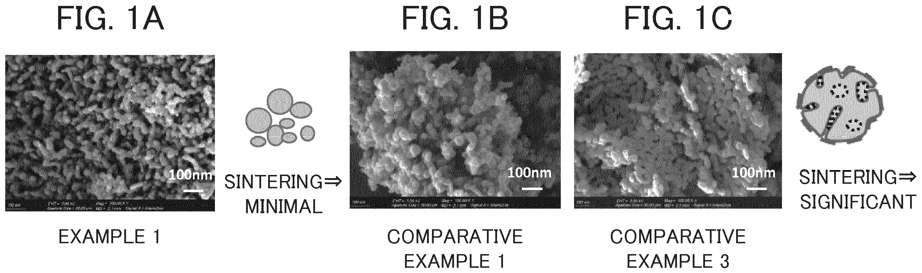

FIGS. 1A to 1C are SEM images for evaluating the coupled state of zinc oxide powders at the time of heat treatment (decarboxylation, dehydration) of Example 1, Comparative Example 1, and Comparative Example 3. The images are obtained through ultra low acceleration SEM (acceleration voltage of 3 kV). (A) Example 1: Ammonium carbonate was used as a carbonic acid source, sintering of fine grains was minimal, and excessive grain growth was suppressed (described in FIG. 1A as SINTERING → MINIMAL); (B) Comparative Example 1: Sodium hydrogen carbonate was used as the carbonic acid source; and (C) Comparative Example 3: The synthesis method according to Patent Document 1 was used.

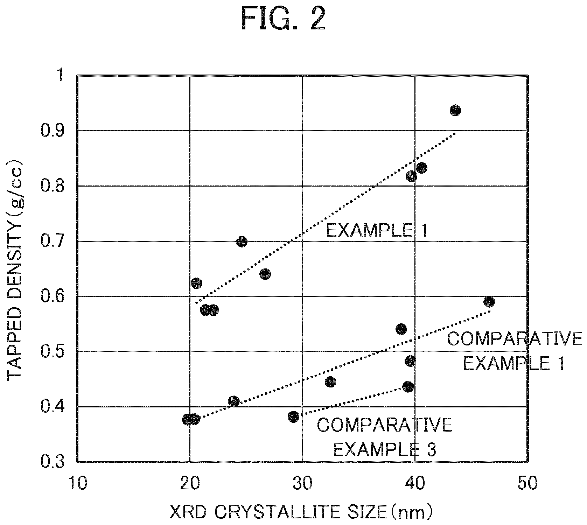

FIG. 2 is a graph showing the relationship between the crystallite size and tapped density of Example 1 and Comparative Examples 1 and 3.

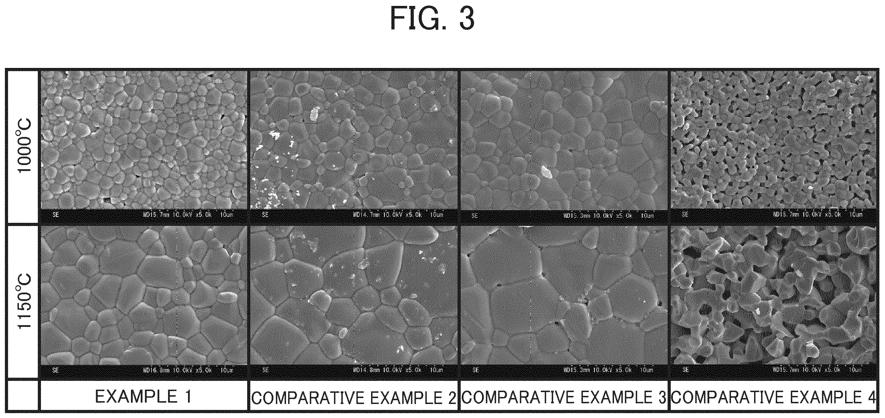

FIG. 3 is a series of SEM images illustrating the change in the number of particles observed by SEM with the firing temperature. The images show a comparison between surfaces obtained by sintering at 1000°C and surfaces obtained by sintering at 1150°C. The images are SEM images, magnified 5k times, of the surfaces of sintered bodies obtained from the zinc oxide powders of Example 1 and Comparative Examples 2, 3 and 4 in which the numbers of particles observed by SEM were counted.

### DETAILED DESCRIPTION OF THE INVENTION

### 1. Zinc oxide powder of present invention

### [Aspects of zinc oxide powder of present invention]

(1) A zinc oxide powder of the present invention has a loose bulk density from 0.38 to 0.50 g/cm³, and a tapped density from 0.50 to 1.00 g/cm³ and more preferably in a range from 0.60 to 1.00 g/cm³ when a crystallite size determined through X-ray diffraction (hereinafter, also referred to merely as a crystallite size) is from 20 to 50 nm, and a particle size (hereinafter, also referred to as a BET diameter) determined through a BET method is from 15 to 60 nm.

Here, the loose bulk density is obtained by using the method defined by JIS R 9301-2-3 to determine the mass when a zinc oxide powder is freely dropped into a stationary container having a volume of 100 mL. This mass is then divided by the volume of the container, and the resulting value is used as the loose bulk density.

The tapped density refers to the bulk density when filling the same container with a maximum number of taps of within 500 times.

As described below in the examples and comparative examples, the zinc oxide powder of the present invention has a higher tapped density than the zinc oxide powders of the comparative examples obtained with a known technique. Through this characteristic of this aspect of the zinc oxide powder of the present invention, when the zinc oxide powder is formed into a press formed body and into a thick film formed body using a paste, the filling density is high, and the contact points between the particles themselves become numerous. Through this, shrinkage is minimal, and a dense sintered body can be obtained even at as low temperature as 1000°C or lower. Furthermore, even when the zinc oxide powder is sintered at high temperatures of 1000°C or higher, grain growth is minimal. The sintered bodies that are obtained by sintering have a small sintered particle size, and therefore exhibit low thermal conductivity with high strength.

(2) Characteristics of a zinc oxide powder of the present invention exhibiting sintering behavior as described above include a median diameter determined through a dynamic scattering method from 30 to 60 nm, a cumulant diameter from 40 to 82 nm, and a cumulant polydispersity index from 0.05 to 0.20, more preferably in a range from 0.05 to 0.15, and even more preferably in a range from 0.05 to 0.12, and the particle size of the zinc oxide powder of the present invention may be prescribed.

Here, the dynamic scattering method is a method in which light is irradiated onto particles dispersed in a solution (fine particles ordinarily exhibit Brownian motion, and the movement thereof is slow with larger particles and fast with smaller particles), and the scattered light thereof (fluctuation corresponding to the speed of each Brownian motion) is observed and measured with a light detector. Hexametaphosphoric acid is used as a dispersant in ion-exchanged water, and the measurements are performed at room temperature. The median diameter is the particle size corresponding to a cumulative analysis value of 50%.

The cumulant diameter is an average diameter calculated by a cumulant arithmetic operation assuming that the autocorrelation function is a one peak distribution.

The cumulant polydispersity index indicates the scale of the distribution spread.

### [Sintering characteristics of zinc oxide powder of present invention]

(3) From the quantitative observation results of particles of sintered body surfaces shown later in Table 4 for the examples and comparative examples, it is found that, in a case in which the crystallite size and the number of particles observed by SEM for the zinc oxide powder of the present invention at 1000°C were compared with the same at 1150°C, the increase in crystallite size was limited to 8%, and the decrease in the number of particles was limited to 60%, and compared to the comparative examples, grain growth was remarkably suppressed. From this as well, it is found that the zinc oxide powder of the present invention is suited for obtaining a high strength sintered body with low thermal conductivity.

Here, the method for quantitative observation of particles at the surface of the sintered body using SEM is as follows. The surface of a sintered bodies was magnified 5k times and images were taken (FIG. 3) by SEM (S-4300 available from Hitachi, Ltd.), and the number of particles within the visual field was counted.

### [Method for producing zinc oxide powder of present invention]

The method for producing the zinc oxide powder of the present invention defined by the above-mentioned characteristic aspect is not limited, and one example of a production method is as follows.

### (Basic zinc carbonate obtained using ammonium carbonate as the carbonic acid source is used as a precursor.)

(4) The relationship between the crystallite size and the tapped density of the zinc oxide powder obtained by heat treating basic zinc carbonate, which is obtained using ammonium carbonate as the carbonic acid source in synthesis, is illustrated in FIG. 2. Compared to a case in which only the ammonium carbonate was changed to sodium hydrogen carbonate corresponding to Comparative Example 1, and compared to a case in which synthesis was carried out with a pH of 8.5 at 60°C in accordance with Patent Document 1 and Non-Patent Document 1 corresponding to Comparative Example 3, given that the crystallite size was the same, a tapped density of approximately 1.5 times was obtained for a case in which ammonium carbonate was used. The reason for the increase in tapped density is still not clear, but as illustrated in the SEM images of FIGS. 1A to 1C, it is thought that one factor is that after heat treatment for decarboxylation and dehydration, agglomeration, or alternatively the coupled state, is minimal. Hereinafter, as the starting material for the zinc oxide powder, the basic zinc carbonate may be referred to as a precursor for the zinc oxide powder or merely as a precursor.
(5) With the zinc oxide powder of the present invention, similar to the known wet process, a basic zinc carbonate (mainly hydrozincite), which is one type of basic zinc salt, is used as a precursor, and zinc oxide is produced through heat treatment to perform decarboxylation and dehydration. In a case in which the heat treatment temperature at this time is high, decarboxylation and dehydration are sufficiently performed, but with nanoparticle zinc oxide, when the temperature is too high, sintering begins, and numerous particles bind together. Furthermore, for a case in which the residual amounts of carbonic acid and bonded water are high from a low temperature treatment, the high residual amounts become a primary factor that inhibits sintering when the main sintering is performed. It was found that, when the decrease in weight when the basic zinc carbonate is decarboxylated and dehydrated is from 97.0% to 99.5% of the weight decrease ratio for a case in which heat treatment was performed at 600°C, the coupled state is minimal and is within a range that does not become a primary factor that inhibits sintering. The temperature thereof is from 270 to 450°C, and is preferably from 350 to 370°C. When the coupling advances, the loose bulk density and tapped density defined by the above-mentioned aspect of the zinc oxide powder of the present invention are not obtained, uneven particle growth and closed pores are produced, and a dense sintered body is not obtained.
(6) Moreover, in the case of basic zinc carbonate, which is a precursor of the zinc oxide powder of the present invention, unlike the prior arts represented by Patent Document 1 and Non-Patent Document 1, the present invention is characterized by synthesis at room temperature, and a flake shape is obtained. The precursor in the flake shape, which is ordinarily called a flower structure of a rose, barely takes on an integrated structure, in other words, crystallinity thereof is poor. Therefore, even when the precursor of the present invention is heat treated, the grains do not easily become coupled grains. As is also clear from the SEM images illustrated in FIGS. 1A to 1C, in Comparative Example 3, a state in which the grains are coupled in a plate shape with traces of the flake-shaped precursor remaining is observed. When a large number of these types of coupled grains are present, grain growth is facilitated at the sites (described in FIG. 1C as SINTERING → SIGNIFICANT), and therefore the sintered body is formed with non-uniform particle sizes.
(7) Furthermore, in the synthesis of basic zinc carbonate, which is a precursor of the zinc oxide powder of the present invention, precipitation ordinarily takes place under highly alkaline conditions, and thereby crystallinity becomes excellent in a state with a 100% yield of zinc. When a precipitation reaction is performed in a state in which the pH is maintained at a constant level with relatively low alkalinity, a precipitate is obtained under a condition where the zinc yield is less than 100% and equal to or greater than 96%, resulting in poor crystallinity (such as an increase in the peak half value). In the prior art, the precursors have a thick, large flake shape and flower shape of a rose with excellent crystallinity, and therefore traces of the precursor shape after heat treatment are retained, and this also brings about the production of coupled grains, non-uniformity in grain growth, and the production of some coarse-grained particles. The technical matters of (4) to (6) described above are combined and presented in Table 4. In view of the crystallite size and number of particles observed by SEM at 1000°C and 1150°C, and the like, it is clear that, with regard to the sintered particles of the zinc oxide sintered body that used the zinc oxide powder of the present invention, grain growth was suppressed, abnormal grain growth was not observed, and the grain size was uniform. From this as well, it is clear that the zinc oxide powder of the present invention is an excellent powder for obtaining a high strength sintered body with low thermal conductivity.

### EXAMPLES

Hereinafter, examples and comparative examples are used to describe a process of synthesizing a basic zinc carbonate, which is a precursor of the zinc oxide powder of the present invention, a process of heat treating the precursor to obtain a zinc oxide powder, a method of producing a zinc oxide sintered body from the zinc oxide powder and an evaluation thereof, but the present invention is not limited to these specific examples.

### <Precursor synthesis>

### (Precursor Synthesis Example 1)

Zinc nitrate hexahydrate (available from Kishida Chemical Co., Ltd.) was used as a zinc source, ammonium carbonate (available from Kishida Chemical Co., Ltd.) was used as a carbonic acid source, and 30 wt% sodium hydroxide (available from Kishida Chemical Co., Ltd.) was used as an alkali. Various aqueous solutions that used pure water were prepared including 1 L of a 0.5 M aqueous solution of zinc nitrate, and 0.5 L of a 0.4 M aqueous solution of ammonium carbonate in a 2 L beaker. A pH electrode for pH control was inserted into the ammonium carbonate aqueous solution, to which the zinc nitrate aqueous solution was added dropwise at a rate of 1 L/h. In order to prevent the pH of the ammonium carbonate aqueous solution from decreasing due to the dropwise addition of the acidic zinc nitrate aqueous solution, 30 wt% sodium hydroxide was added dropwise to the ammonium carbonate aqueous solution using a liquid feeding pump with on/off control through a pH controller (TDP-51 available from Toko Kagaku Kenkyujo KK) to thereby maintain the pH of the ammonium carbonate aqueous solution at a constant value of pH 7.5 during the dropwise addition of the zinc nitrate aqueous solution.

After liquid feeding was completed, the mixture was stirred and cured for 20 hours to form a basic zinc carbonate slurry as a precursor. Throughout this precipitate production reaction as well as stirring and curing, a cooling device was installed so that the temperature of the ammonium carbonate aqueous solution was constantly maintained at less than 30°C.

The slurry after curing was subjected to solid-liquid separation through suction filtration, and in order to wash and remove the unused sodium and such, the solid content was re-slurried with an appropriate amount of pure water, after which the solid and liquid were separated by suction filtration. This washing step was repeated four times.

The solid content after washing was vacuum dried for 20 hours at 30°C using a vacuum dryer, and a dried powder of basic zinc carbonate, which is the precursor, was obtained.

Identification of mineral phase and measurement of crystallize size (through the Scherrer method) for the obtained basic zinc carbonate precursor were performed by X-ray diffraction (D8 ADVANCE available from Bruker Corporation). In addition, the amount of thermal reduction was measured through thermogravimetry and differential thermal analysis (TG-DTA) (using the TG/DTA 6300 available from Hitachi High-Technologies Corporation), carbon analysis was performed through a combustion method (using the LECO CS844 elemental analyzer), and the Zn and Na were analyzed through ICP (using the ICP-9000 available from Shimadzu Corp.).

The results of X-ray diffraction and component analysis showed that the obtained precipitate was basic zinc carbonate including hydrozincite (Zn₅(CO₃)₂(OH)₆·2H₂O) as a main constituent substance. Moreover, the precipitation yield at this time was 98%. The results also showed that the amount of thermal reduction through decarboxylation and dehydration ended at approximately 600°C.

### (Precursor Synthesis Example 2)

Hydrozincite as a precursor was synthesized in the same manner as that of the synthesized example of Precursor Synthesis Example 1 with the exception that sodium hydrogen carbonate was used as the carbonic acid source.

### (Precursor Synthesis Example 3)

Synthesis was performed under the same conditions as those of the Precursor Synthesis Example 1 with the exception that the pH during synthesizing was set to 6.0 and 8.5. All of the precipitates were basic carbonates containing hydrozincite as a main constituent substance, but at the pH of 6.0, the amount of obtained precipitate was small, and from an analysis of the solution, it was found that yield was around 20%, and the economic efficiency was considerably low. At the pH of 8.5, the yield was 100%, and a precursor similar to that of the example was obtained.

### (Precursor Synthesis Example 4)

Synthesis was performed in accordance with Patent Document 1 and Non-Patent Document 1. The zinc source was changed from zinc chloride to zinc nitrate, the carbon source was left as sodium hydrogen carbonate, and in the precipitation reaction, sodium hydroxide was added to an aqueous solution of zinc nitrate and sodium hydrogen carbonate while stirring so that the pH was 8.5. The precipitation reaction was allowed to take place while maintaining the container at a temperature from 40 to 60°C.

More specifically, zinc nitrate hexahydrate (available from Kishida Chemical Co., Ltd.) was used as the zinc source, sodium hydrogen carbonate (sodium bicarbonate; available from Kishida Chemical Co., Ltd.) was used as a carbonic acid source, and 30 wt% sodium hydroxide (available from Kishida Chemical Co., Ltd.) was used as the alkali. Various aqueous solutions that used pure water were prepared including 1 L of a 0.5 M aqueous solution of zinc nitrate, and 0.5 L of a 0.4 M aqueous solution of sodium hydrogen carbonate in a 2 L beaker. The liquid feeding and pH control were performed in the same manner as Synthesis Example 1. The pH was maintained at a constant value of 8.5 during the dropwise addition of the zinc nitrate aqueous solution by adding 30 wt% sodium hydroxide dropwise into the sodium hydrogen carbonate aqueous solution. Throughout this precipitate production reaction as well as stirring and curing, a hot water circulation device was installed so that the temperature of the sodium hydrogen carbonate aqueous solution was constantly maintained at a temperature from 40°C to less than 60°C. As with the examples, the precipitate thus obtained was a basic carbonate including hydrozincite as a main constituent substance, and the precipitate yield was nearly 100%.

### (Precursor Synthesis Example 5)

Synthesis was performed with the same conditions as the Precursor Synthesis Example 1 with the exception that the zinc raw material was changed to anhydrous zinc chloride (available from Kishida Chemical Co., Ltd.), and the carbonic acid source was changed to sodium hydrogen carbonate. As with the Precursor Synthesis Example 1, the precipitate thus obtained was a basic carbonate including hydrozincite as a main constituent substance, and the precipitate yield was 99%. Furthermore, from the component analysis results, the residual amount of chlorine was approximately 1.6% (residual amount of chlorine in the zinc oxide after decarboxylation and dehydration), which was high.

### (Heat treatment)

The basic zinc carbonate that was synthesized in each of the above-described precursor synthesis examples was charged into an alumina crucible and then heat treated in an air atmosphere at 360°C. The rate of temperature increase was set to 2°C/min, the retention time at 360°C was 6 hours, and natural cooling was performed. Measurement results for the amount of weight decrease after heat treatment are shown in Table 1. The weight decrease ratios are expressed as relative values with respect to a reference weight decrease ratio of 100% when heat treatment was performed at 600°C. Moreover, the specific surface area was measured through a BET adsorption method (using the AUTOSORB-MP1 available from Quantachrome Corporation). Loose bulk density and tapped density were also measured in accordance with JIS methods. The particle sizes calculated using the BET surface area, and the measurement results for the loose bulk density and tapped density are shown in Table 1. With heat treatment at 360°C, the weight decrease ratios were from 98.5 to 99.9%, and a difference due to production conditions was not observed. It was found that the loose bulk density of the powder was the highest with Example 1, which is the heat treated product of the Precursor Synthesis Example 1. The particle size distribution was also measured using the dynamic scattering method (with the SZ-100 available from Horiba, Ltd.). The particle size distribution measurement results are shown in Table 2. The particle sizes (median diameters) are in a range from 30 to 60 nm, but as is clear from the cumulant polydispersity index, the particle size distribution of Example 1, which is the heat treated product of Precursor Synthesis Example 1 is sharp.

### Table 1

**Table 1: Powder characteristics after heat treatment*¹**

| | Precursor that was used | Weight decrease ratio*² (%) | BET diameter (nm) | Loose bulk density (g/cm³) | Tapped density (g/cm³) |
|---|---|---|---|---|---|
| Example 1 | Precursor Synthesis Example 1 | 99 | 30 | 0.430 | 0.699 |
| Comparative Example 1 | Precursor Synthesis Example 2 | 99.4 | 23 | 0.237 | 0.378 |
| Comparative Example 2*³ | Precursor Synthesis Example 3 | 98.5 | 31 | 0.241 | 0.410 |
| Comparative Example 3 | Precursor Synthesis Example 4 | 99.9 | 30 | 0.222 | 0.382 |
| Comparative Example 4 | Precursor Synthesis Example 5 | 99.8 | 34 | 0.224 | 0.373 |

| | | | | | |
|---|---|---|---|---|---|
| *1: Powder heat treated at 360°C. *2: Relative value with respect to a reference weight decrease ratio of 100% when heat treatment was performed at 600°C. *3: The sample of Comparative Example 2 was synthesized at a pH of 8.5. | | | | | |

### Table 2

**Table 2: Powder characteristics after heat treatment*¹**

| | Precursor that was used | Median diameter (nm) | Cumulant diameter (nm) | Cumulant polydispersity index |
|---|---|---|---|---|
| Example 1 | Precursor Synthesis Example 1 | 34.1 | 54.0 | 0.053 |
| Comparative Example 1 | Precursor Synthesis Example 2 | 38.1 | 49.6 | 0.118 |
| Comparative Example 2*² | Precursor Synthesis Example 3 | 57.9 | 82.0 | 0.221 |
| Comparative Example 3 | Precursor Synthesis Example 4 | 47.9 | 139.5 | 0.300 |
| Comparative Example 4 | Precursor Synthesis Example 5 | 39.1 | 56.0 | 0.313 |

| | | | | |
|---|---|---|---|---|
| *1: Powder heat treated at 360°C. *2: The sample of Comparative Example 2 was synthesized at a pH of 8.5. | | | | |

### (Zinc oxide powders were produced at varied temperatures for heat treatment of the basic zinc carbonate, which was the precursor, and the dependency of the characteristics of the zinc oxide powder on the heat treatment temperature was evaluated)

Zinc oxide powders were produced under the same conditions as the above-described heat treatment example with the exception that the highest temperature of the above-described heat treatment example was changed to 200°C to 550°C. The temperature dependencies of the decrease in weight due to heat treatment, the particle sizes (BET diameters) calculated using the BET surface area, and the loose bulk densities and tapped densities of the zinc oxide powders obtained by heat treating the basic zinc carbonates synthesized in the Precursor Synthesis Examples 1 and 4 are summarized in Table 3. In the Heat Treatment Example 1 - Example 1 (which used the Precursor Synthesis Example 1), it was found that the weight decrease ratio was in a range of from 97 to 99.5%, the crystallite size was small, and the filling density was high. The Heat Treatment Example 2 - Precursor Synthesis Example 1 used the same precursor, and when the heat treatment temperature was low, the decrease in weight was not sufficient, and when the heat treatment temperature was too high, the crystallite size became too large. When the crystallite size is large, grains do not easily grow during sintering, causing a delay in densification, and thus a large crystallite size is not suited for sintering at low temperatures. With the Heat Treatment Example 3 - Precursor Synthesis Example 4, it was found that in comparison to Example 1, the filling density was low, and when heat treated at a high temperature, the crystallite size was large.

### Table 3

**Table 3: Heat treatment temperature dependency of powder characteristics**

| Heat treatment example | Basic zinc carbonate precursor that was used | Heat treatment temperature (°C) | Weight decrease ratio*¹ (%) | BET diameter (nm) | Loose bulk density (g/cm³) | Tapped density (g/cm³) | Crystallite size (nm) |
|---|---|---|---|---|---|---|---|
| Heat Treatment Example 1 (Example 1) | Precursor obtained in Precursor Synthesis Example 1 | 270 | 97.5 | 18 | 0.372 | 0.58 | 14 |
| | | 360 | 99 | 30 | 0.382 | 0.624 | 27 |
| | | 450 | 99.4 | 58 | 0.5 | 0.98 | 55 |
| Heat Treatment Example 2 | Precursor obtained in Precursor Synthesis Example 1 | 200 | 94 | 5 | 0.25 | 0.322 | 4 |
| | | 230 | 97 | 10 | 0.275 | 0.424 | 9 |
| | | 470 | 99.6 | 65 | 0.475 | 0.833 | 65 |
| | | 550 | 99.9 | 102 | 0.575 | 1.054 | 140 |
| Heat Treatment Example 3 | Precursor obtained in Precursor Synthesis Example 4 | 360 | 99.9 | 30 | 0.222 | 0.382 | 32 |
| | | 230 | 98 | 15 | 0.27 | 0.3 | 14 |
| | | 470 | 99.9 | 70 | 0.35 | 0.4 | 85 |

| | | | | | | | |
|---|---|---|---|---|---|---|---|
| *1: Relative value with respect to a reference weight decrease ratio of 100% when heat treatment was performed at 600°C. | | | | | | | |

### (Sintered body production and evaluation)

### Sintering example

Powder that had become zinc oxide through heat treatment was passed through a 0.6 mm sieve, subjected to simple crushing was performed, and with a pressure of approximately 60 MPa, bodies having a disc shape of ϕ20 mm × 2 mm, and bodies having a plate shape of 40 × 40 × 5 mm were formed. In the present example, granulation using a spray dryer or the like was not performed. This is because it was thought that the impact on sintered bodies exerted by a difference in powder characteristics depending on the precursor synthesis conditions would become clear by using samples subjected only to decarboxylation and dehydration through heat treatment, and the production of actual product is not limited thereto.

Bodies in the number of n = 5 were each produced and the bodies were sintered in an air atmosphere with the highest temperatures of 1000°C and 1150°C maintained for 6 hours with a heating rate of 4°C/min, and then left in the furnace to cool.

After sintering, the disc shaped bodies were used as samples for SEM observations, for specific gravity measurements using the Archimedes' method, for X-ray diffraction, and for thermal conductivity measurements through a laser flash method (using the TC-1200RH available from Advance Riko, Inc.). The plate shaped samples were each processed into a rod shape measuring 30 × 4 × 4 mm, which was then used as a sample for measuring the flexural strength in accordance with ISO178. FIG. 3 and Table 4 present the crystallite sizes determined through X-ray diffraction, the number of SEM observed particles as determined from SEM observations, and the change rate thereof between temperatures of 1000°C and 1150°C. It is found that, in a case in which the crystallite size and the number of particles observed by SEM for the zinc oxide powder of the present invention at 1000°C were compared with the same at 1150°C, the increase in crystallite size was limited to 8%, and the decrease in the particle size was limited to 60%, and compared to the comparative examples, grain growth was remarkably suppressed. From this as well, it is found that the zinc oxide powders of the example of the present invention is suited for obtaining a high strength sintered body with low thermal conductivity. Furthermore, in Comparative Example 4 where a large amount of chlorine was contained, the increase in the crystallite size was large, but the increase in voids was remarkable, and therefore the particles in the visual field decreased, having a significant decrease in the number of particles.

Table 5 shows the measurement results for the relative density, flexural strength, and thermal conductivity. The relative density was low in Comparative Example 4 where a large amount of chlorine was contained, and densification was not sufficient so that the flexural strength was also low. However, the crystallite size was large, and thus the thermal conductivity was high. Note that, here, the density was determined through measurements using the Archimedes' method. In the table, the density is shown as a relative value with respect to a true density of 5.61 g/cm³ of zinc oxide.

### Table 4

**Table 4: Change in particle size when sintering***

| | Precursor used in zinc oxide powder production | Crystallite size (nm) | | | Number of particles observed by SEM (pcs) | | |
|---|---|---|---|---|---|---|---|
| | | 1000°C | 1150°C | Increase rate (%) 1000→1150 | 1000°C | 1150°C | Decrease rate (%) 1000→1150 |
| Example 1 | Precursor Synthesis Example 1 | 88 | 95 | 8.0 | 195 | 78 | 60.0 |
| Comparative Example 1 | Precursor Synthesis Example 2 | 115 | 140 | 21.7 | 135 | 35 | 74.1 |
| Comparative Example 2*¹ | Precursor Synthesis Example 3 | 127 | 167 | 31.5 | 119 | 33 | 72.3 |
| Comparative Example 3 | Precursor Synthesis Example 4 | 88 | 101 | 14.8 | 93 | 26 | 72.0 |
| Comparative Example 4 | Precursor Synthesis Example 5 | 80 | 135 | 68.8 | 150 | 20 | 86.7 |

| | | | | | | | |
|---|---|---|---|---|---|---|---|
| *: Powder heat treated at 360°C. *1: The sample of Comparative Example 2 was synthesized at a pH of 8.5. | | | | | | | |

### Table 5

**Table 5: Sintered body characteristics**

| | Relative density (%) | | Flexural strength (MPa) | | Thermal conductivity (W/m·K) | |
|---|---|---|---|---|---|---|
| Firing temperature (°C) | 1000 | 1150 | 1000 | 1150 | 1000 | 1150 |
| Example 1 | 97 | 98.5 | 128.8 | 147 | 1.8 | 2.1 |
| Comparative Example 1 | 95.5 | 97.5 | 110.6 | 134.9 | 2 | 2.7 |
| Comparative Example 2^{*1} | 95 | 97 | 104.6 | 127 | 2.6 | 3 |
| Comparative Example 3 | 96 | 98 | 116.7 | 140.9 | 1.9 | 2.6 |
| Comparative Example 4 | 93 | 94 | 80.4 | 92.5 | 2.1 | 2.6 |

| | | | | | | |
|---|---|---|---|---|---|---|
| *: Powder heat treated at 360°C. *1: The sample of Comparative Example 2 was synthesized at a pH of 8.5. | | | | | | |

The precursors used in the production of the zinc oxide powders are the same as those of Table 4.

### (Examples of dependency of sintered body characteristics on precursor heat treatment temperature)

Precursors that were heat treated at temperatures varied in accordance with Table 3 were sintered at 1150°C. Table 6 shows the measurement results for the relative density, flexural strength, and thermal conductivity of the obtained sintered bodies. The measurement results for the relative density, flexural strength, and thermal conductivity of sintered bodies obtained when the heat treatment conditions for decarboxylation and dehydration were set to those conditions shown for the comparative heat treatment examples and the powders were sintered similarly at 1150°C are shown in Table 6. The zinc oxide powder of Comparative Example 3 was used except in Example 1, which is the present invention. The relative density and flexural strength are high in Example 1, and the thermal conductivity is high in Comparative Example 3. In addition, in both Example 1 and Comparative Example 3, it was found that when the heat treatment temperature is low, the relative density and flexural strength both decrease due to the impact of residue, and when the heat treatment temperature is high, densification is not sufficient due to grain growth in association with the increase in crystallite size, also resulting in a decrease in both the relative density and flexural strength.

### Table 6

**Table 6: Dependency of sintered body characteristics* on precursor heat treatment temperature**

| Heat treatment example | Zinc oxide powder that was used | Basic zinc carbonate precursor that was used | Heat treatment temperature (°C) | Relative density (%) | Flexural strength (MPa) | Thermal conductivity (W/m·K) |
|---|---|---|---|---|---|---|
| Heat Treatment Example 1 (Example 1) | Zinc oxide powder of Example 1 | Precursor obtained in Precursor Synthesis Example 1 | 270 | 98.5 | 145 | 2 |
| | | | 360 | 98.5 | 147 | 2.1 |
| | | | 450 | 98 | 140 | 2 |
| Heat Treatment Example 2 | Zinc oxide powder of Example 1 | Precursor obtained in Precursor Synthesis Example 1 | 200 | 96 | 116.7 | 1.8 |
| | | | 230 | 97 | 128.8 | 1.9 |
| | | | 470 | 97.5 | 134 | 2 |
| | | | 550 | 96 | 116 | 1.8 |
| Heat Treatment Example 3 | Zinc oxide powder of Comparative Example 3 | Precursor obtained in Precursor Synthesis Example 4 | 360 | 98 | 140.9 | 2.7 |
| | | | 230 | 96.5 | 122.8 | 2.3 |
| | | | 470 | 96 | 118 | 2.4 |

| | | | | | | |
|---|---|---|---|---|---|---|
| *Main burning at 1150 °C | | | | | | |

### (Examples of dependency of sintered body characteristics on sintering temperature)

Sintered bodies were obtained by sintering in the same manner as with the above-described sintering examples with the exception that Example 1 and Comparative Example 3 prepared in the precursor synthesis examples and heat treatment examples shown in Tables 1, 2 and 4 were sintered at the highest sintering temperature of 600 to 1300°C. An evaluation of the characteristics was conducted in the same manner as described above, and the impact of the sintering temperature on the characteristics of the sintered zinc oxide powder of the present invention in the sintering examples was examined. As a comparison, only Comparative Example 3 is shown. The main characteristics associated with sintering temperatures from 600°C to 1300°C are summarized in Table 7.

### Table 7

**Table 7: Dependency of sintered body characteristics on sintering temperature**

| | Relative density (%) | | Flexural strength (MPa) | | Thermal conductivity (W/m·K) | |
|---|---|---|---|---|---|---|
| Sintering temperature °C | Example 1 | Comparative Example 3 | Example 1 | Comparative Example 3 | Example 1 | Comparative Example 3 |
| 600 | 80 | 70 | - | - | 0.1 | 0.09 |
| 900 | 92 | 90 | 68.2 | 44 | 1.1 | 0.8 |
| 1000 | 97.5 | 96 | 134.9 | 115 | 1.6 | 1.9 |
| 1150 | 98.5 | 98 | 147 | 140.9 | 2.1 | 2.7 |
| 1200 | 99 | 98.5 | 153 | 144 | 2.2 | 2.9 |
| 1300 | 99.5 | 99 | 155 | 148 | 2.3 | 3 |

### Evaluation of examples and their production conditions

The zinc oxide powder of Example 1 had a crystallite size determined through X-ray diffraction from 20 to 50 nm, a particle size determined through the BET method from 15 to 60 nm, a loose bulk density from 0.38 to 0.50 g/cm³, and a tapped density from 0.50 to 1.00 g/cm³ and more preferably in a range from 0.60 to 1.00 g/cm³. It was found that by setting the median diameter determined through the dynamic scattering method to a range from 30 to 60 nm, the cumulant diameter to a range from 40 to 82 nm, and the cumulant polydispersity index to a range from 0.05 to 0.20, more preferably from 0.05 to 0.15, and even more preferably from 0.05 to 0.12, densification occurred before the sintering temperature reaches the temperature of 1000°C, while even in a case where the sintering temperature was 1150°C, the increase rate of the crystallite size and the decrease rate of the number of particles observed by SEM were small in comparison to the comparative examples, and therefore it is clear that high strength sintered bodies with low thermal conductivity are obtained.

It was found that zinc oxide powder having such characteristics can be easily produced under the following conditions. However, the method for producing the zinc oxide powder of the present invention is not limited to the following production method. For example, even in a case in which the zinc oxide powder is produced by other production methods and thereafter subjected to crushing, classification, grain size distribution adjustment and the like whereby the zinc oxide powder of the present invention is selectively obtained, the zinc oxide powder is one that is within the scope of the present invention as long as falling within the scope set forth by the claims of the present application.

From amongst well-known raw materials such as sodium hydrogen carbonate (sodium bicarbonate), sodium carbonate, and ammonium carbonate, the use of ammonium carbonate as the carbonic acid source rather than sodium hydrogen carbonate like that found in Patent Document 1 and Non-Patent Document 1 contributes to densification at low temperature sintering for obtaining high loose bulk density and tapped density even with nearly the same crystallite size determined through X-ray diffraction and particle size determined through the BET method in a case where all other conditions are made uniform. This is also clear from the SEM observations after heat treatment as illustrated in FIGS. 1A to 1C.

In this example, in order to obtain the above-described high loose bulk density and tapped density, a temperature of 360°C at which 0.5% to 3.0% of carbonate ions and bonded water remain is suited as the temperature for heat treating the precursor. At temperatures lower than 360°C, decarboxylation and dehydration at the time of the main sintering occur on a larger level, and inhibit sintering. At temperatures higher than 360°C, the coupling of primary particles begins, and the amount of coupled grains increases. This causes not merely a decrease in tapped density. Large coupled grains grow faster, resulting in even larger sintered particles. This phenomenon is known as Ostwald ripening, and is a cause of the particle size of the sintered body becoming non-uniform.

A precursor that makes it difficult for coupled grains to form after heat treatment is desired, and in the present invention, it was discovered that with the zinc oxide precursor is preferably produced using ammonium carbonate as the raw material, besides, through synthesis under low alkaline conditions at ordinary temperature. In Patent Document 1 and Non-Patent Document 1, synthesis is performed at high temperatures and under high alkaline conditions, and as illustrated in the SEM images of FIG. 1, after heat treatment, the zinc oxide particles form coupled grains in a state of retaining the flake shape, which is the shape of the precursor, or traces of a flower structure of a rose with the flake shape being integrated. In the present invention, the precipitation yield and the crystallinity of the precursor decrease, but the zinc oxide particles can be prevented from retaining the flake shape, which is the shape of the precursor, or retaining traces of a flower structure of a rose with the flake shape being integrated.

### INDUSTRIAL APPLICABILITY

The sintered body made from the zinc oxide powder of the present invention is dense, exhibits high strength with low thermal conductivity and therefore can be used as a thermal insulation material in the form of a plate-shaped bulk material or a thick film. The sintered body of the present invention can be formed into a porous member by utilizing the characteristic of small grain growth and thus can be used as a gas sensor or filter. More particularly, efficacy in an antimicrobial filter that prevents the propagation of Escherichia coli and the like can be anticipated.

## Claims

1. A zinc oxide powder wherein a crystallite size determined through X-ray diffraction is from 20 to 50 nm, a particle size determined through a BET method is from 15 to 60 nm, a loose bulk density is from 0.38 to 0.50 g/cm³, and a tapped density is from 0.50 to 1.00 /cm³.

2. A zinc oxide powder wherein a median diameter determined through a dynamic scattering method is from 30 to 60 nm, a cumulant diameter is from 40 to 82 nm, and a cumulant polydispersity index is from 0.05 to 0.20.

3. The zinc oxide powder according to claim 1 or 2, wherein a crystallite size of sintered particles determined through X-ray diffraction is from 70 to 120 nm when the sintered particles are obtained by sintering the zinc oxide powder according to claim 1 or 2 at 1000°C, a crystallite size of sintered particles determined through X-ray diffraction is from 75 to 170 nm when the sinter particles are obtained by sintering the zinc oxide powder at 1150°C, and a rate of increase in the crystallite size determined through X-ray diffraction from the sintered particles sintered at 1000°C to the sintered particles sintered at 1150°C is 10% or less.
